# EUROPÄISCHE PATENTSCHRIFT

(11) **EP 2 006 055 B1**
(45) Veröffentlichungstag und Bekanntmachung des Hinweises auf die Patenterteilung: **30.12.2009**
(21) Anmeldenummer: 08158660.4
(22) Anmeldetag: 20.06.2008
(51) Int. Cl.: B25J 9/10, B25J 19/00, B25J 19/06, F16F 15/04, F16H 25/18

(54) **Roboter-Manipulator-Gelenkantrieb mit Drehmomentstütze**
Robot-manipulator articulated drive with torque support
Entraînement d'articulation de manipulateur de robot avec support de couple

(30) Priorität: 22.06.2007 DE 102007028758
(43) Veröffentlichungstag der Anmeldung: 24.12.2008
(73) Patentinhaber: Deutsches Zentrum für Luft- und Raumfahrt e.V., 51147 Köln (DE)
(72) Erfinder: Eiberger, Oliver, 80634 München (DE)
(74) Vertreter: von Kirschbaum, Alexander

(56) Entgegenhaltungen:
- WO-A-89/08012
- BE-A- 386 289
- DE-A1- 3 702 494
- DE-A1- 10 010 680
- DE-A1-102005 016 780
- DE-A1-102006 040 958
- DE-A1-102007 014 023
- DE-B- 1 270 332
- DE-C- 585 096
- DE-C- 597 912
- JP-A- 57 192 648
- SU-A1- 1 483 132
- US-A- 4 725 087

## Beschreibung

Die Erfindung bezieht sich auf einen Gelenkantrieb für einen Roboter-Manipulator.

Unter einem Gelenkantrieb für einen Roboter-Manipulator ist vorliegend der Antrieb für ein beliebiges Gelenk bzw. eine beliebige Achse eines Roboter-Manipulators zu verstehen, das zwei Manipulator-Elemente gelenkig miteinander verbindet und den Winkel der Elemente zueinander einstellt. Manipulator-Elemente sind vorliegend die Armelemente des Manipulator-Arms und die Manipulator-Basis. In der Praxis werden als Gelenkantrieb in der Regel Starrantriebe verwendet, d.h. der Abtrieb ist direkt und ungefedert, gegebenenfalls über ein Antriebsgetriebe untersetzt, mit dem Antriebsmotor verbunden.

Bei Robotern im menschlichen oder in unbekanntem Umfeld, Laufrobotern und Industrierobotern sind bei bestimmten Anwendungen jedoch nicht-starre Gelenkantriebe erwünscht, um beispielsweise das Verletzungs- und Beschädigungsrisiko bei Kollisionen des Manipulatorarmes mit Personen oder Gegenständen zu verringern. Durch einen nicht-starren Gelenkantrieb wird ferner erreicht, dass äußere auf den Manipulatorarm einwirkende Kräfte nicht starr in den Gelenkantrieb eingeleitet werden, wodurch die Gefahr von Beschädigungen des Gelenkantriebs verringert wird. Auch bei humanoiden Robotern und in der Bionik werden nicht-starre Gelenkantriebe verwendet, die, ähnlich wie der menschliche Muskel, während dynamischer Bewegungen Bewegungsenergie zwischen-speichern können, Bei den bekannten nicht-starren elastischen Manipulatorarm-Gelenkantrieben sind der Wirkungsgrad, die Leistungsdichte und die Integrationsdichte unbefriedigend. Das Rückstellmoment der Drehmomentstützen herkömmlicher Manipulatorarm-Gelenkantriebe ist in der Praxis so gering, dass diese für einen Manipulatorarm mit mehreren Gelenken, die gegebenenfalls das Eigengewicht einer oder mehrerer Manipulatorarm-Elemente tragen müssen, dynamisch agieren können müssen und eine ausreichende Positioniergenauigkeit aufweisen müssen, nicht geeignet sind.

Die DE-A-3702494 entspricht dem Oberbegriff des Anspruchs 1, die verwendete Drehmomentstütze ist einstellbar.

Aufgabe der Erfindung ist es demgegenüber, einen Roboter-Manipulator-Gelenkantrieb mit hoher Leistungsdichte zu schaffen.

Diese Aufgabe wird erfindungsgemäß gelöst mit den Merkmalen des Patentanspruches 1.

Der erfindungsgemäße Manipulatorarm-Gelenkantrieb weist einen Antriebsmotor, ein von dem Antriebsmotor angetriebenes Antriebsgetriebe und eine Antriebswelle auf, wobei das Antriebsgetriebe eine gefedert gelagerte Drehmomentstütze aufweist. Die Drehmomentstütze wird von einer drehbaren Kurvenscheibe und mindestens einem mit einer Hebelfeder vorgespannten Kurvenhebel gebildet, der auf der Kurvenscheibe läuft. Der Kurvenhebel erzeugt bei Auslenkung der Kurvenscheibe aus der Neutrallage ein Rückstellmoment und begrenzt federnd die Drehung der Kurvenscheibe.

Durch Einsatz einer Kurvenscheibe mit einem Kurvenhebel wird die Mäglichkeit geschaffen, die Federung der Drehmomentstütze progressiv auszugestalten, und zwar durch eine entsprechende Gestaltung der Kurvenbahn der Kurvenscheibe. Auf diese Weise ist es beispielsweise möglich, schon bei kleinen Auslenkungen der Drehmomentstütze aus der Neutrallage bereits relativ hohe Rückstellkräfte zu realisieren. Durch eine entsprechende Gestaltung der Kurvenbahn kann in einem weiten Bereich die Progession der Rückstellkraft gegenüber der Auslenkung eingestellt werden. Durch die Bildung der Drehmomentstütze aus einer Kurvenscheibe und schwenkbaren Kurvenhebein kann die Federkraft der Hebelfeder um ein Mehrfaches übersetzt werden. Auf diese Weise sind auf sehr kleinem Raum hohe Rückstellkräfte der Drehmomentstütze realisierbar.

Die Kurvenscheibe liegt bevorzugt in einer Ebene parallel zu den drehenden Elementen des Antriebsgetriebes und besonders bevorzugt ist die Axiale der Kurvenscheibe identisch mit der Axialen des Antriebsmotors und/oder des Antriebsgetriebes. Hierdurch wird eine hohe Energiedichte und ein kompakter Aufbau ermöglicht.

Unter Drehmomentstütze im Sinne der Erfindung wird insbesondere ein Element verstanden, dessen Aufgabe das Auffangen eines Differenz-Drehmoments, beispielsweise zwischen einem Antrieb und einem Abtrieb und insbesondere dessen Einleitung in eine Tragstruktur oder eine feste Struktur, wie beispielsweise ein Gehäuse oder ein Rahmen ist.

Gemäß einer bevorzugten Ausgestaltung ist mindestens einer der Kurvenhebel verstellbar ausgebildet, d.h. der ortsfeste oder quasi-ortsfeste Anlenkpunkt des Kurvenhebels ist verstellbar ausgebildet, so dass der Kurvenhebel als Ganzes im Verhältnis zu dem Kurvenhebel der zweiten Drehrichtung verschoben oder geschwenkt werden kann. Auf diese Weise ist die Steifigkeit der Drehmomentstütze im Betrieb des Manipulatorarms verstellbar. So kann beispielsweise während der Endphase einer Positionierung der Gelenkantrieb bzw. die Drehmomentstütze sehr steif eingestellt werden, indem der verstellbare Kurvenhebel derart gegenüber dem ihm entgegen wirkenden Kurvenhebel verstellt wird, dass die Federkraft der rückstellenden Hebelfeder durch Verschiebung des Arbeitpunktes auf der Kurvenscheibe hoch übersetzt wird und/oder die Hebelfeder stärker vorgespannt ist. Hierdurch wird eine höhere Positioniergenauigkeit des Manipulatorarm-Gelenkantriebs ermöglicht. Ist eine hohe Positioniergenauigkeit jedenfalls temporär entbehrlich und eine größere Nachgiebigkeit des Gelenkantriebs erwünscht, kann der Kurvenhebel gegenüber dem ihm entgegen wirkenden Kurvenhebel derart verstellt werden, dass der Gelenkantrieb weich ausgelegt ist.

Bevorzugt ist ein Kurvenhebel-Stellantrieb vorgesehen, mit dem der verstellbare Kurvenhebel verstellt werden kann. Der Stellantrieb ist bevorzugt ein kompakter Elektromotor, der ein hochuntersetztes Getriebe, beispielsweise ein Gleitkeilgetriebe aufweist. Auf diese Weise kann während des Betriebes des Roboters die Steifigkeit der Drehmomentstütze jederzeit innerhalb kürzester Zeit verstellt und an die jeweilige Situation angepasst werden.

Gemäß einer bevorzugten Ausgestaltung weist der Kurvenhebel ein Kurvenrad auf, das auf der Kurvenscheibe läuft. Hierdurch wird die Reibung zwischen dem Kurvenhebel und der Kurvenscheibe auf ein Minimum reduziert, so dass die gefederte Drehmomentstütze praktisch keine Hysterese zeigt.

Vorzugsweise ist die Einzel-Kurvenbahn der Kurvenscheibe von der Achsennähe der Kurvenscheibe aus nach radial außen verlaufend. Mit einer derartigen Kurvenbahn können, abhängig von der Verstellposition des Kurvenhebels, verschiedene Charakteristiken der Drehmomentstützen-Federung eingestellt werden. Liegt der Kurvenhebel im radial inneren Bereich der Kurvenbahn an, werden relativ geringe Rückstellkräfte mit kleiner Progression generiert, so dass die Hebelfeder bei Auslenkung nur eine geringe Längenänderung erfährt. Steht der Kurvenhebel dagegen im radial äußeren Bereich einer Einzel-Kurvenbahn, werden relativ hohe Rückstellkräfte generiert, da schon geringe Auslenkungsänderungen große Längenänderungen der Hebeifeder zur Folge haben. Durch entsprechende Krümmung der Kurvenbahn kann auf die Progression der Rückstellkräfte Einfluss genommen werden.

Vorzugsweise weist die Kurvenscheibe je zwei einander spiegelsymmetrische aber nicht zwingend gleiche Doppel-Kurvenbahnen auf, die jeweils sowohl der einen und als auch der anderen Drehrichtung zugeordnet sind.

Vorzugsweise weist die Kurvenscheibe je zwei oder mehr zueinander punktsymmetrische Einzel-Kurvenbahnen auf, die im Zusammenwirken mit den jeweils zugeordneten Kurvenheben mit ungefähr gleichen Kräften in die gleiche Drehrichtung wirken. An den Einzel-Kurvenbahnen ist jeweils ein separater Kurvenhebel angeordnet. Hierdurch kann die Rückstellkraft auf engstem Raum verdoppelt werden.

Gemäß einer bevorzugten Ausführungsform verspannt die Hebelfeder die beiden richtungsgleich wirkenden Kurvenhebel unmittelbar miteinander. Die Kurvenhebel werden also nicht an dem ortsfesten Gehäuse vorgespannt, sondern werden durch das Federelement unmittelbar miteinander verspannt.

Gemäß einer bevorzugten Ausgestaltung wirkt der Stellantrieb auf zwei richtungsgleich wirkende Kurvenhebel. Bei dieser Konstellation sind also zwei richtungsgleich wirkende ortsfeste Kurvenhebel an zwei Einzel-Kurvenbahnen und zwei richtungsgleich wirkende verstellbare Kurvenhebel an zwei weiteren Einzel-Kurvenbahnen vorgesehen. Sowohl die beiden feststehenden Kurvenhebel als auch die beiden verstellbaren Kurvenhebel können jeweils durch eine einzige Hebelfeder direkt miteinander verspannt sein.

Vorzugsweise weist der Stellantrieb ein Stellgetriebe auf, das als Gleitkeilgetriebe ausgebildet ist. Alternativ oder ergänzend kann auch das Antriebsgetriebe von einem Gleitkeilgetriebe gebildet werden. Gleitkeilgetriebe sind unter der Bezeichnung "Harmonic Drive" bekannt und sind sehr kompakt. Sie weisen hohe Übersetzungen von 1:30 bis 1:300 auf. Gleitkeilgetriebe sind daher für Antriebsgetriebe und Stellgetriebe eines Manipulatorarm-Gelenkantriebes sehr geeignet.

Im Folgenden wird unter Bezugnahme auf die Zeichnungen ein Ausführungsbeispiel der Erfindung näher erläutert.

Es zeigen:
- Fig. 1: eine schematische Darstellung eines Roboter-Manipulatararm-Gelenkantriebes,

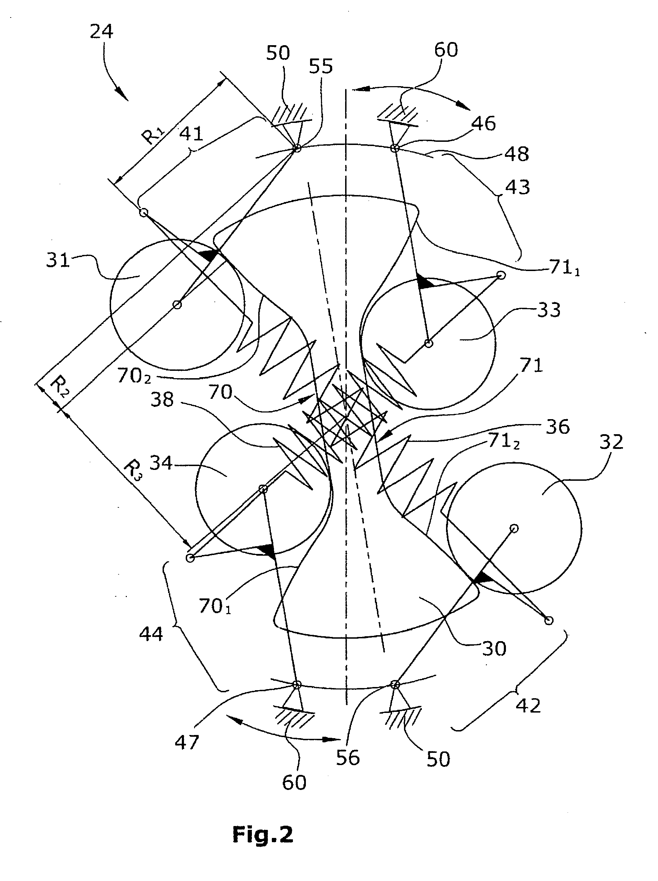

- Fig. 2: eine schematische Darstellung der Drehmomentstütze des Manipulatorarm-Gelenkantriebes der Fig. 1,

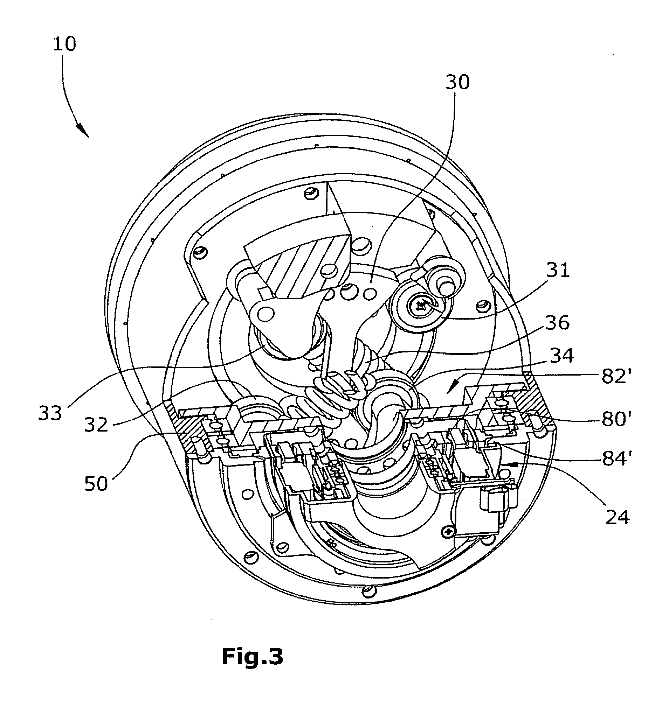

- Fig. 3: eine teilweise geschnittene Darstellung des Roboter-Manipulatorarm-Gelenkantriebes der Fign. 1 und 2, und
- Fign. 4A - 4B: zwei Diagramme des Rückstellmomentes über den Auslenkwinkel bzw, die in den Federn gespeicherte Energie.

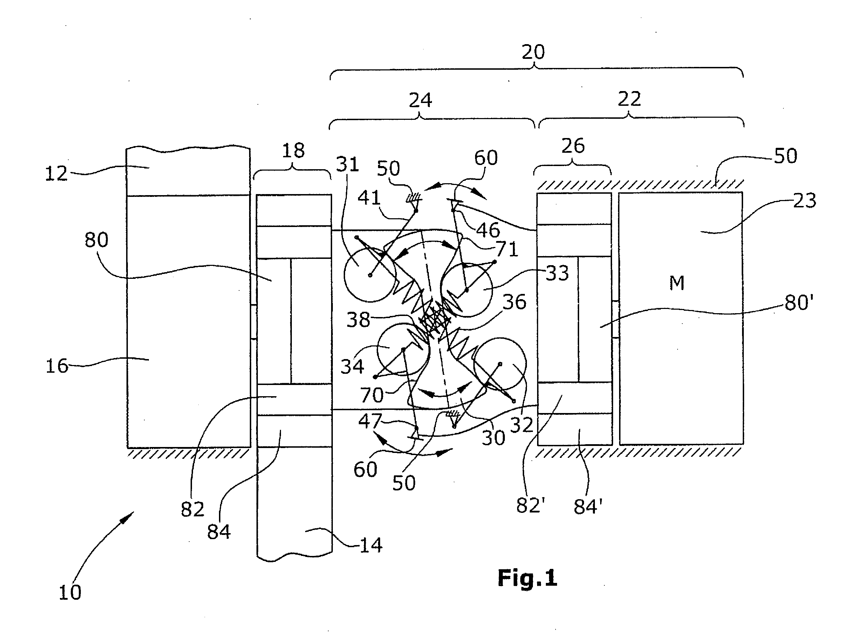

In Fig. 1 ist schematisch ein Roboter-Manipulatorarm-Gelenkantrieb 10 dargestellt, durch den zwei Armelemente 12,14 eines Roboter-Manipulatorarmes gelenkig und angetrieben miteinander verbunden sind. Der Roboter kann ein Industrieroboter sein, der in der Fertigung eingesetzt wird. Der Roboter kann ebenso ein anderer, beispielsweise humanoider Roboter sein, wobei der Manipulatorarm als Arm oder Bein ausgebildet ist und Laufbewegungen, Wurfbewegungen oder Bewegungen anderer Art durchführt.

Der Manipulatorarm-Gelenkantrieb 10 gliedert sich im Wesentlichen in einen Antriebsmotor 16 mit einem Antriebsgetriebe 18 und eine Drehmomentstütze 20, die wiederum von einem Stellantrieb 22 und einer Drehmomentstützen-Federung 24 gebildet wird. Der Stellantrieb 22 wird wiederum von einem Stellmotor 23 und einem Stellgetriebe 26 gebildet.

Der elektrische Antriebsmotor 16 erzeugt ein Drehmoment, das von dem Antriebsgetriebe 18 hoch untersetzt auf das abtriebsseitige Armelement 14 übertragen wird, wodurch sich das abtriebsseitige Armelement 14 gegenüber dem antriebsseitigen Armelement 12 um die Rotationsachse schwenkt. Das Antriebsgetriebe 18 weist keine ortsfeste Drehmomentstütze auf, sondern weist eine gefederte und verstellbare Drehmomentstütze 20 mit einer Federung 24 auf. Die in Fig. 1 dargestellte Federung 24 liegt nicht, wie dargestellt, in der Blattebene, sondern in einer Ebene parallel zu den Rotationsebenen der Getriebe 18,26.

Ein Bauteil des Antriebsgetriebes 18 ist starr verbunden mit einer drehbaren Kurvenscheibe 30, deren Drehung durch mittels Hebelfedern 36,38 vorgespannte Kurvenhebel 41-44 stets in einer Gleichgewichtsposition gehalten wird. Die Kurvenhebel 41-44 weisen jeweils ein Kurvenrad 31-34 auf, wodurch die Kurvenhebel 41-44 praktisch widerstandsfrei auf der Kurvenscheibe 30 laufen.

Zwei Kurvenhebel 41,42 der vier Kurvenhebel 41-44 sind ortsfest angelenkt, d.h. durch Gelenke 55,56 an dem Gehäuse 50 des Gelenkantriebes 10 angebunden, das ortsfest mit dem ersten Armelement 12, dem Antriebsmotor 16 und dem Stellantrieb 22 verbunden ist. Die beiden anderen Kurvenhebel 43, 44 sind beweglich zu dem Gehäuse 50 auf einem Einstellring 60 gelagert angeordnet. Dadurch können die Hebelgelenke 46,47 auf einer Kreislinie 48 bewegt werden, deren Mittelpunkt die Rotationsachse der Kurvenscheibe 30 ist. Auch die Anlenkpunkte 55,56 liegen auf der Kreislinie 48.

Durch den Stellantrieb 22 bzw. den Antrieb des Stellantriebes 22 kann der Einstellring 60 im Verstellbereich der Momentenstütze verdreht werden, an dem die Anlenkpunkte bildenden Kurvenhebel-Gelenke 46,47 angeordnet sind. Auf diese Weise lassen sich die Anlenkpunkte der beiden verstellbaren Kurvenhebel 43,44 verstellen. Hierdurch lässt sich die jeweilige Gleichgewichtsposition der Kurvenscheiben 30 verändern und lassen sich damit auch die Rückstellkräfte im Bezug auf die Auslenkung in einem weiten Bereich einstellen.

Die Kurvenscheibe 30 weist zwei einander punktsymmetrisch und spiegelsymmetrisch gegenüberliegende wannenförmige Doppel-Kurvenbahnen 70, 71 auf, deren jeweils zwei Einzel-Kurvenbahnen 70₁,70₂,71₁,71₂ jeweils einen gekrümmten, nach außen annähernd radialen Verlauf haben und auf diese Weise zusammen mit den jeweiligen Kurvenhebeln 41-44 Endanschläge bilden.

Sowohl das Antriebsgetriebe 18 als auch das Stellgetriebe 26 ist jeweils als sogenanntes Gleitkeilgetriebe ausgebildet, auch "Harmonic Drive" genannt. Die beiden Getriebe 18,26 weisen jeweils eine innere durch den betreffenden Motor 16,23 angetriebene rotierende Wellenscheibe 80,80', eine durch die rotierende Wellenscheibe 80,80' kontinuierlich verformte flexible außenverzahnte Zahnkette 82,82' und einen starren innenverzahnten Außenring 84,84' auf, in den die außenverzahnte Zahnkette 82,82' eingreift.

Bei dem Antriebsgetriebe 18 ist die Wellenscheibe 80 motorseitig und ist der Außenring 84 abtriebsseitig angeordnet. Die Zahnkette 82 stützt an der Drehmomentstütze ab und ist rotatorisch mit der Kurvenscheibe 30 verbunden. Bei dem Stellgetriebe 26 wird die Wellenscheibe 80' durch den Stellmotor 24 angetrieben. Der Außenring 84' ist fest mit dem Gelenkgehäuse 50 verbunden. Die Zahnkette 82' ist rotatorisch mit dem Einstellring 60 verbunden, verstellt diesen also.

Wenn ein in das Antriebsgetriebe 18 antriebsseitig oder abtriebsseitig eingeleitetes Drehmoment auftritt, wird hierdurch über die Zahnkette 82 ein entsprechendes Drehmoment in die Kurvenscheibe 30 eingeleitet. Die Kurvenscheibe 30 zwingt die Kurvenrollen 30-34 bzw. die hiermit verbundenen Hebel 41-44 gegen die Zugkraft der betreffenden Hebelfedern 36,38 in eine ausgelenkte Position. Hierbei werden die betreffenden Hebelfedern 36,38 progressiv gedehnt, d.h. die Rückstellkraft steigt überproportional mit der Auslenkung der Kurvenscheibe 30. Auf diese Weise wird eine progressive Charakteristik des Rückstellmoments realisiert, die sich über die Form der Kurvenscheibe 30, die Anlenkpunkte der Hebel 41-44, die Stellung des Einstellringes 60 sowie über die Dimensionierung und Charakteristik der Hebelfedern 36,38 einstellen.

Das Rückstellmoment entsteht durch die Federkraft der betreffenden Hebelfeder 36,38, die über den wirksamen Hebel R₁ ein Moment in dem betreffenden Kurvenhebel 41-44 um dessen jeweiligen Anlenkpunkt 46,47,55,56 einleitet. Dieses Drehmoment erzeugt über den Wirkradius R₂ der Kurvenräder 31-34 eine Kontaktkraft auf die Kurvenscheibe 30, welche sich wiederum mit einem Wirkradius R₃ zum halben Rückstellmoment der betreffenden Seite multipliziert.

Das von der Kurvenscheibe 30 nach außen wirkende Gesamt-Drehmoment setzt sich zusammen aus den überlagerten Drehmomenten beider Doppel-Kurvenbahnen 70,71 der Kurvenscheibe 30. Da die Kennlinien aller Einzel-Kurvenbahnen 70₁,70₂,71₁,71₂ der Kurvenscheibe 30 bei verschiedenen Verspannungszuständen gleich bleiben, ergibt sich im Betrieb eine einfache Berechnung der resultierenden Drehmomente.

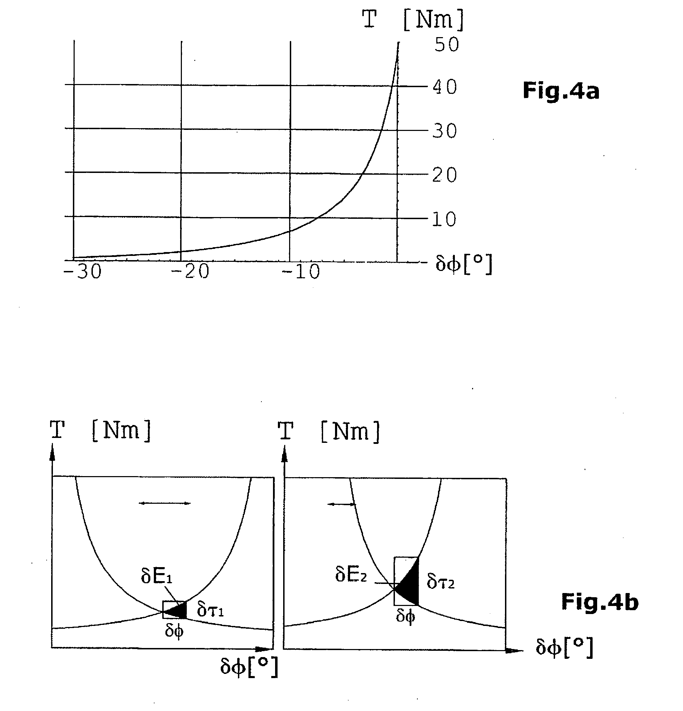

Die Fig. 4A zeigt eine typische Kennlinie der Drehmomentstütze 20 für eine einzige Hebelfeder 36, 38. In den Fign. 4A und 4B ist auf der Ordinate das Rückstellmoment T und auf der Abszisse die Kurvenscheiben-Auslenkung δφ dargestellt. In der Fig. 4B sind zwei verschiedene Diagramme der in den Hebelfedern gespeicherten Energie δE₁, δE₂ für verschiedene Einstellungen des Einstellrings 60 dargestellt.

## Patentansprüche

1. Roboter-Manipulator-Gelenkantrieb (10) mit einem Antriebsmotor (16), einem von dem Antriebsmotor (16) angetriebenen Antriebsgetriebe (18) und einem Abtrieb, wobei das Antriebsgetriebe (18) eine gefedert abgestützte Drehmomentstütze (20) aufweist,
**dadurch gekennzeichnet,**
**dass** die Drehmomentstütze (20) von einer Kurvenscheibe (30) und mindestens einem mit einer Hebelfeder (36,38) gefederten Kurvenhebel (41-44) gebildet wird, der auf der Kurvenscheibe (30) läuft und bei Drehung der Kurvenscheibe (30) ein Rückstellmoment erzeugt.

2. Roboter-Manipulator-Gelenkantrieb nach Anspruch 1, **dadurch gekennzeichnet, dass** der Kurvenhebel (43,44) verstellbar ausgebildet ist.

3. Roboter-Manipulator-Gelenkantrieb nach Anspruch 2, **dadurch gekennzeichnet, dass** ein Kurvenhebel-Stellantrieb (22) vorgesehen ist, mit dem der verstellbare Kurvenhebel (43,44) verstellt werden kann.

4. Roboter-Manipulator-Gelenkantrieb nach einem der Ansprüche 1 bis 3, **dadurch gekennzeichnet, dass** der Kurvenhebel (41-44) jeweils ein Kurvenrad (31-34) aufweist, das auf der Kurvenscheibe (30) läuft.

5. Roboter-Manipulator-Gelenkantrieb nach einem der Ansprüche 1 bis 4, **dadurch gekennzeichnet, dass** die Kurvenscheibe (30) zueinander spiegelsymmetrische Doppel-Kurvenbahnen (70, 71) für jeweils beide Bewegungsrichtungen aufweist.

6. Roboter-Manipulator-Gelenkantrieb nach einem der Ansprüche 1 bis 5, **dadurch gekennzeichnet, dass** die Kurvenscheibe (30) zwei oder mehr einander punktsymmetrisch gegenüberliegende oder gedrehte Einzel-Kurvenbahnen (70₁, 71₁; 70₂,71₂) aufweist.

7. Roboter-Manipulator-Gelenkantrieb Anspruch 5 oder 6, **dadurch gekennzeichnet, dass** jeder Doppel-Kurvenbahn (70,71) jeweils ein richtungsgleich wirkender Kurvenhebel (41,42;43,44) zugeordnet sind.

8. Roboter-Manipulator-Gelenkantrieb nach einem der Ansprüche 3 bis 7, **dadurch gekennzeichnet, dass** der Kurvenhebel-Stellantrieb auf zwei richtungsgleich wirkende Kurvenhebel (43,44) wirkt.

9. Roboter-Manipulator-Gelenkantrieb nach Anspruch 7 oder 8, **dadurch gekennzeichnet, dass** die Hebelfeder (36,38) die beiden jeweils richtungsgleich wirkenden Kurvenhebel (41,42;43,44) direkt miteinander verspannt.

10. Roboter-Manipulator-Gelenkantrieb nach einem der Ansprüche 1 bis 9, **dadurch gekennzeichnet, dass** das Antriebsgetriebe 18 von einem Gleitkeilgetriebe gebildet wird.

11. Roboter-Manipulator-Gelenkantrieb nach einem der Ansprüche 3 bis 10, **dadurch gekennzeichnet, dass** der Stellantrieb (22) ein als Gleitkeilgetriebe ausgebildetes Stellgetriebe (26) aufweist.

12. Roboter-Manipulator-Gelenkantrieb nach einem der Ansprüche 1 bis 11, **dadurch gekennzeichnet, dass** das Kurvenende der Kurvenbahn (70, 71) derart ausgebildet ist, dass es zusammen mit dem Kurvenhebel (41, 44) einen Endanschlag bildet.

## Claims

1. Articulated joint drive (10) for a robot manipulator arm comprising a drive motor (16), a drive gear (18) driven by said drive motor (16) and an output, said drive gear (18) comprising a resiliently supported torque support (20),
**characterized in that**
the torque support (20) is formed by a cam disc (30) and at least one cam lever (41-44) sprung by a lever spring (36, 38), which cam lever runs on the cam disc (30) and generates a restoring moment when the cam disc (30) rotates.

2. Articulated joint drive for a robot manipulator arm as defined in claim 1, **characterized in that** said cam lever (43, 44) is adjustable.

3. Articulated joint drive for a robot manipulator arm as defined in claim 2, **characterized in that** a cam lever actuator (22) is provided by means of which the adjustable cam lever (43, 44) can be adjusted.

4. Articulated joint drive for a robot manipulator arm as defined in one of claims 1 to 3, **characterized in that** the cam lever (41-44) has a respective cam wheel (31-34) running on the cam disc (30).

5. Articulated joint drive for a robot manipulator arm as defined in one of claims 1 to 4, **characterized in that** the cam disc (30) has mirror-symmetric double cam tracks (70, 71) for both directions of movement, respectively.

6. Articulated joint drive for a robot manipulator arm as defined in one of claims 1 to 5, **characterized in that** the cam disc (30) comprises two or more point symmetrically opposite or rotated single cam tracks (70₁, 71₁; 70₂, 71₂).

7. Articulated joint drive for a robot manipulator arm as defined in claim 5 or 6, **characterized in that** a cam lever (41,42 43, 44) is assigned to each double cam track (70, 71), respectively, said cam lever acting in the same direction.

8. Articulated joint drive for a robot manipulator arm as defined in one of claims 3 to 7, **characterized in that** the cam lever actuator acts on two cam levers (43, 44) acting in the same direction.

9. Articulated joint drive for a robot manipulator arm as defined in claim 7 or 8, **characterized in that** the lever spring (36, 38) directly joins the two cam levers (41, 42, 43, 44) respectively acting in the same direction.

10. Articulated joint drive for a robot manipulator arm as defined in one of claims 1 to 9, **characterized in that** the output (18) is formed by an ellipto-centric gearing.

11. Articulated joint drive for a robot manipulator arm as defined in one of claims 3 to 10, **characterized in that** the actuator (22) comprises a control gear (26) designed as an ellipto-centric gearing.

12. Articulated joint drive for a robot manipulator arm as defined in one of claims 1 to 11, **characterized in that** the cam end of the cam track (70, 71) is designed such that it forms an end stop together with the cam lever (41, 44).

## Revendications

1. Entraînement d'articulation (10) de bras manipulatoire de robot comprenant un engrenage d'entraînement (18) entraîné par un moteur d'entraînement (16) et une sortie, l'engrenage d'entraînement (18) comprenant un support de couple (20) supporté de manière suspendue,
**caractérisé en ce que**
ledit support de couple (20) est formé par une came (30) et au moins un levier de came (41-44) suspendu par un ressort de levier (36, 38), ledit levier se déplaçant sur la came (30) et générant un moment de rappel lorsque la came (30) tourne.

2. Entraînement d'articulation de bras manipulatoire de robot selon la revendication 1, **caractérisé en ce que** le levier de came (43, 44) est réglable.

3. Entraînement d'articulation de bras manipulatoire de robot selon la revendication 2, **caractérisé en ce qu'**un servomoteur du levier de came (22) est prévu par lequel le levier de came (43, 44) réglable peut être réglé.

4. Entraînement d'articulation de bras manipulatoire de robot selon l'une des revendications 1 à 3, **caractérisé en ce que** le levier de came (41-44) comprend une roue de came (31-34) respective, qui se déplace sur la came (30).

5. Entraînement d'articulation de bras manipulatoire de robot selon l'une des revendications 1 à 4, **caractérisé en ce que** la came (30) comprend des rainures de came (70, 71) doubles respectivement pour les deux directions de mouvement, les rainures étant symétriques l'une par rapport à l'autre.

6. Entraînement d'articulation de bras manipulatoire de robot selon l'une des revendications 1 à 5, **caractérisé en ce que** ladite came (30) comprend deux ou plus rainures de came (70₁, 71₁; 70₂, 71₂) uniques s'opposant ou tournées symétriquement par rapport à un point.

7. Entraînement d'articulation de bras manipulatoire de robot selon la revendication 5 ou 6, **caractérisé en ce qu'**un levier de came (41, 42; 43, 44) respectif agissant dans la même direction est associé à chaque rainure de came double (70, 71)

8. Entraînement d'articulation de bras manipulatoire de robot selon l'une des revendications 3 à 7, **caractérisé en ce que** le servomoteur du levier de came agit sur deux leviers de came (43, 44) agissant dans la même direction.

9. Entraînement d'articulation de bras manipulatoire de robot selon la revendication 7 ou 8, **caractérisé en ce que** le ressort de levier (36, 38) directement connecte les deux leviers de came (41, 42; 43, 44) respectivement agissant dans la même direction.

10. Entraînement d'articulation de bras manipulatoire de robot selon l'une des revendications 1 à 9, **caractérisé en ce que** l'engrenage d'entraînement (18) est formé par un réducteur elliptocentrique.

11. Entraînement d'articulation de bras manipulatoire de robot selon l'une des revendications 3 à 10, **caractérisé en ce que** le servomoteur (22) est une commande de réglage réalisée sous forme d'un réducteur elliptocentrique (26).

12. Entraînement d'articulation de bras manipulatoire de robot selon l'une des revendications 1 à 11, **caractérisé en ce que** l'extrémité de came de la rainure de came (70, 71) est réalisée de manière qu'elle forme une butée de fin de course avec ledit levier de came (41, 44).
